# EUROPEAN PATENT APPLICATION

(11) **EP 4 375 816 A1**
(43) Date of publication of application: **29.05.2024**
(21) Application number: 22306736.4
(22) Date of filing: 24.11.2022
(51) Int. Cl.: G06F 3/0362, G06F 3/0485

(54) **SCROLL EVENT CONTROLLED BY MAGNETIC DETECTION OF ROTATION OF USER-BORNE DEVICE**

(71) Applicant: Advanced Magnetic Interaction, AMI, 38170 Seyssinet-Pariset (FR)
(72) Inventor: Vallejo, Jean-Luc, 38170 Seyssinet-Pariset (FR); Jobert, Timothée, 38170 Seyssinet-Pariset (FR); Riou, Sébastien, 38170 Seyssinet-Pariset (FR); Hautson, Tristan, 38170 Seyssinet-Pariset (FR)
(74) Representative: Peterreins Schley

(57) **Abstract**

A system for determining a manipulation of a user-borne device by a user comprising a user-borne device comprising a body, at least one magnetic object defining a magnetic moment vector and operationally coupled to the body such that a rotation of the body about a first rotation axis causes a rotation of the at least one magnetic object about the first rotation axis, a plurality of magnetometers associated with an interaction surface, wherein the plurality of magnetometers is configured to create a sensing volume and configured to measure a magnetic field associated with the at least one magnetic object, wherein the system is configured to register a scroll event when a rotation of the body about the first rotation axis is determined by the system on the basis of the measured magnetic field associated with the at least one magnetic object.

## Description

### TECHNICAL FIELD

The present disclosure relates to the technical field of determining and/or tracking a manipulation of passive accessories, to a system for determining a manipulation of a user-borne device by a user and an associated computer-implemented method for determining the manipulation of the user-borne device.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device 100 may not comprise a power source (e.g., batteries) and/or means to receive power (e.g., wireless power transmission via an inductive coil) for powering an electronic feature of the user-borne device 100. Electronically passive means that no computation or processing occurs (or happens) on the user-borne device. The magnetometer measurements enable determining and/or tracking of the manipulation of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

In current applications, a magnetic object arranged in or coupled to a user-borne device may be approximated by a dipole to allow its location determination and/or tracking within a sensing created by the plurality of magnetometers volume. The magnetic object approximated as a dipole may create a magnetic field which is rotationally symmetric about at least one axis. Such a magnetic object may be manipulated by a user within the sensing volume and may allow a tracking and/or manipulation determination of its movement in five degrees of freedom. The five degrees of freedom may include a translation of the magnetic object (and the user-borne device, to the magnetic object is coupled to) along three axes, a first rotation about a first axis and a second rotation about a second axis. However, a rotation of the magnetic object about the at least one axis, to which the magnetic field is rotationally symmetric, may not be detectable. As a result, application fields and areas in passive accessory location determination and/or tracking may be limited. More specifically, certain movements of the magnetic object and/or of the user-borne device may not be detectable and may limit specific additional functions of the user-borne device.

Thus, the object of the present disclosure is to provide a user-borne device and a system for determining a manipulation of a user-borne device by a user, which enable improved tracking determination of a user-borne device manipulated within a sensing volume.

### SUMMARY

The present disclosure relates to a system for determining a manipulation of a user-borne device by a user as defined in claim 1 and a computer-implemented method for determining a manipulation of a user-borne device by a user as defined in claim 14. The dependent claims depict advantageous embodiments of the present disclosure.

According to a first aspect of the present disclosure, a system for determining a manipulation of a user-borne device by a user is provided. The system comprises a user-borne device comprising a body, at least one magnetic object defining a magnetic moment vector and operationally coupled to the body such that a rotation of the body about a first rotation axis causes a rotation of the at least one magnetic object about the first rotation axis, a plurality of magnetometers associated with an interaction surface, wherein the plurality of magnetometers is configured to create a sensing volume and configured to measure a magnetic field associated with the at least one magnetic object, wherein the system is configured to register a scroll event when a rotation of the body about the first rotation axis is determined by the system on the basis of the measured magnetic field associated with the at least one magnetic object.

According to a second aspect, a computer-implemented method for determining a manipulation of a user-borne device by a user is provided. The computer-implemented method comprises measuring a magnetic field associated with at least one magnetic object with a plurality of magnetometers, wherein the at least one magnetic object is coupled to a body of a user-borne device and the plurality of magnetometers is configured to create a sensing volume wherein the user-borne device is operable on an interaction surface defined within the sensing volume, and registering a scroll event when a rotation of the body about a first rotation axis is determined by the system on the basis of the measured magnetic field associated with the at least one magnetic object.

An effect of the technique of the present specification is to provide a system and a computer-implemented method, that allows determining a manipulation of a user-borne device by a user. This results in various advantages.

The techniques of the present disclosure may allow the tracking and/or orientation and/or manipulation determination of a user-borne device in at least five degrees of freedom with only one magnetic object, since based on its magnetization direction orientation, a rotation of the magnetic object about at least one axis can be detected within a sensing volume created by the plurality of magnetometers. Thereby, the accuracy of tracking and/or manipulation determination of the magnetic object and/or the user-borne device may be increased, more specifically e.g., without providing additional magnetic objects. Furthermore, additional functions can be integrated in the user-borne device and application fields of the user-borne device and the system can be extended. At least one trigger event (e.g., associated with the additional functions) can be controlled by the user-borne device and/or detected by the system in an improved manner, as it may be associated with the detectable rotation about the at least one axis or a detectable translational manipulation along another axis. In addition, the combination of the detection of a rotation of the magnetic object about the at least one axis and the detection of a translation of the magnetic object along another axis may enable the application of the system of the present disclosure in many different fields. Another advantage may result from the fact that the user-borne device may be operated without a power supply and may therefore grant considerable freedom in operation, especially with regard to the duration of use. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: schematically illustrates an exemplary embodiment of a system for determining a manipulation of a user-borne device by a user according to aspects of the present disclosure;
- **Fig. 2**: schematically illustrates an exemplary embodiment of a user-borne device for determining a manipulation of a user-borne device by a user in a rotated position in a top view;
- **Fig. 3**: schematically illustrates an exemplary embodiment of a system for determining a manipulation of a user-borne device by a user in a side view;
- **Fig. 4**: schematically illustrates a computer-implemented method for determining a manipulation of a user-borne device according to an aspect of the present disclosure.

### DETAILED DESCRIPTION

References throughout the preceding specification to "one embodiment", "an embodiment", "one example" or "an example", "one aspect" or "an aspect" means that a particular feature, structure, or characteristic described in connection with the embodiment or example is included in at least one embodiment of the present disclosure. Thus, appearances of the phrases "in one embodiment", "in an embodiment", "one example" or "an example", "one aspect" or "an aspect" in various places throughout this specification are not necessarily all referring to the same embodiment or example.

Embodiments of the system for determining a manipulation of a user-borne device and the computer-implemented method for determining a manipulation of a user-borne device according to the present disclosure will be described in reference to the drawings as follows.

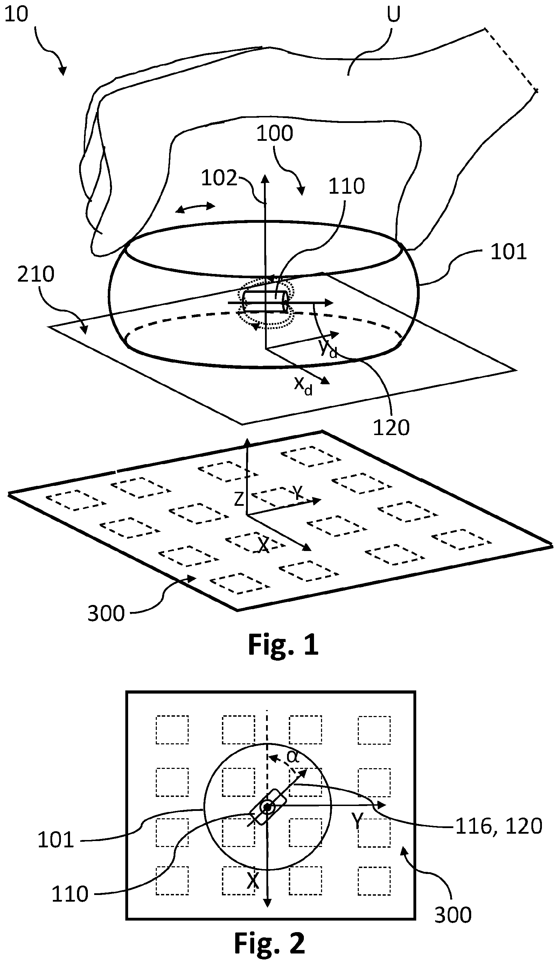

**Fig. 1** schematically illustrates an exemplary embodiment of a system 10 for determining a manipulation of a user-borne device 100 by a user according to aspects of the present disclosure. More specifically, the system 10 may be suitable for determining a manipulation of an electrically passive user-borne device 100. In other words, the system 10 may be suitable for determining and/or tracking a manipulation of a user-borne device 100 within a sensing volume. According to the first aspect, the system for determining a manipulation of a user-borne device 100 by a user comprises a user-borne device 100. The user-borne device 100 comprises a body, at least one magnetic object 110 defining a magnetic moment vector 120 and operationally coupled to the body 101 such that a rotation of the body 101 about a first rotation axis 102 causes a rotation of the at least one magnetic object 110 about the first rotation axis 102. Furthermore, the system 10 comprises a plurality of magnetometers 300 associated with an interaction surface 210. The plurality of magnetometers 300 is configured to create a sensing volume and is configured to measure a magnetic field associated with the at least one magnetic object 110. The system 10 is configured to register a scroll event when a rotation of the body 101 about the first rotation axis 102 is determined by the system 10 on the basis of the measured magnetic field associated with the at least one magnetic object 110. In other words, the plurality of magnetometers 300 allows the measurement of a magnetic field associated with the at least one magnetic obj ect 110 within an volume and thus in three dimensions. The interaction surface may be arranged within this sensing volume. The plurality of magnetometers 300 is configured to collect magnetic field measurements associated with the at least one magnetic object 110 inside the reference coordinate system XYZ, as illustrated in **Fig. 1****.** The reference coordinate system XYZ may be defined by the arrangement of the plurality of magnetometers 300. The term "at least one magnetic object" may refer to an object which may comprise components made of magnetic material, i.e., a material that has magnetic properties measurable by the plurality of magnetometers 300. The at least one magnetic object may be represented by the magnetic moment vector 120 and/or a magnetic object position vector in the sensing volume. The system 10 may be configured to determine the magnetic moment vector 120 and/or the magnetic object position vector on the basis of the measured magnetic field. The system 10 may be configured to determine the magnetic moment vector 120 and/or the magnetic object position vector on the basis of the measured magnetic field using estimation filter such as Kalman Filter, or specifically extended Kalman filter or unscented Kalman filter. The magnetic object position vector may define a magnetic object position and/or a magnetic object distance with respect to the reference coordinate system XYZ or the interaction surface 210. The orientation of the magnetic moment vector 120 results from the orientation of the magnetization of the at least one magnetic object 110. The system 10 may be configured to track a manipulation of the at least one magnetic object 110 in at least five degrees of freedom. The rotation of the body 101 about the first rotation axis 102 is detected via the rotation of the at least one magnetic object 110 about the first rotation axis 102. Rotation of the body 101 causes the at least one magnetic object 110 coupled to the body to also rotate. This rotation can be detected with respect to the reference coordinate system XYZ by the plurality of magnetometers 300. The rotation of the body 101 about the first rotation axis 102 may be a first degree of freedom. A second degree of freedom may result from a translational movement of the at least one magnetic object 110 along the first rotation axis 102, as described further below. The first rotation axis 102 may be a normale of the interaction surface 210. In examples, the first rotation axis 102 may be parallel to the reference axis Z of the reference coordinate system XYZ. In examples, the first rotation axis 102 may be inclined to the reference axis Z of the reference coordinate system XYZ.

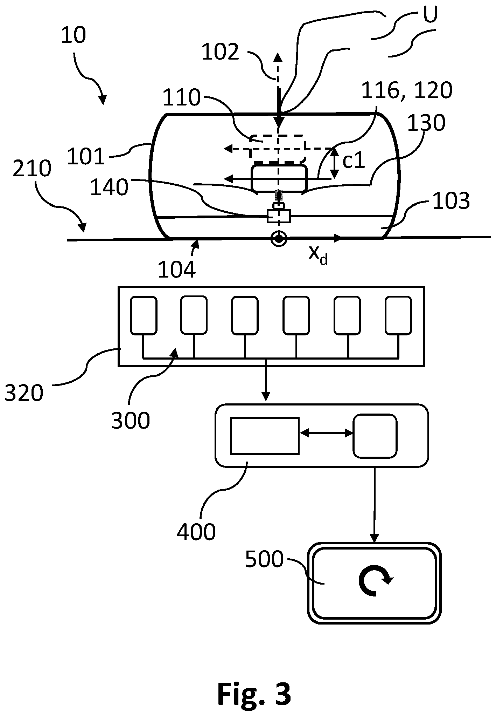

In examples, the plurality of magnetometers 300 may be fixedly arranged in a magnetometer body 320 (see, e.g., Fig. 3) defining a fixed position and/or orientation of the plurality of magnetometers (300) with respect to each other. The number of magnetometers provided may depend on the size of the interaction surface 210, on which the user-borne device 100 is operated. In other words, the larger the interaction surface 210, the more magnetometers 300 may be provided. In the embodiment shown in Fig. 1, the plurality of magnetometers 300 may be arranged in rows and columns. However, it is also possible that the plurality of magnetometers may be arranged in an unordered manner within the magnetometer body 320. A calibration procedure may be used to determine the exact locations, measurement axes, internal sensitivity, cross axis sensitivity, and offset of each magnetometer within the magnetometer body 320 relative to the reference coordinate system XYZ.

In examples, the term "scroll event" may be a control mode of a function in a virtual environment that is associated with a user input. The control mode may result in a rotational and/or translational movement of a virtual object in the virtual environment. The function associated with the scroll event may comprise a scroll function such as scrolling of files or data, a rotational or translational movement of the virtual object associated with a selection of a choice from a plurality of choices. The scroll function associated with the scroll event may include rotating a body in a virtual environment and/or changing a perspective in a virtual environment. For instance, a scroll function may include one or more of moving a cursor from in two opposing directions, moving a displayed element (e.g. a page, a cursor) which may be controlled by the user-borne device 100, a step in a direction, flipping through a menu, flipping through a selection list, or adjusting (e.g. increasing or decreasing) a parameter (e.g. a setting or a configuration). This enables various new application fields for the user-borne device 100, for instance a dial, a mouse scroll element (e.g. a wheel), a joystick, a control for an electronic device (e.g. an audio control or a visual control), a control of software settings or visualizations (e.g. graphic software or design software), or a control of a computer game. Further, a scroll event may be associated with the control of hardware such as a rolling shutter or a gate.

In embodiments, the user-borne device comprises a base 103 coupled to the body 101. The base 103 may comprise a device contact surface 104 being orthogonal to the first rotation axis 102 and extending along a first device axis x_{d} and a second device axis y_{d} orthogonal to the first device axis x_{d}. When in use by a user the user-borne device 100 may be configured to be placed/manipulated with the device contact surface 104 in contact with the interaction surface 210. **Fig. 3** shows an exemplary embodiment of the user-borne device 100 in a side view comprising the base 103. In examples, the base 103 may be a lower unit of the user-borne device 100, i.e., a component facing the interaction surface 210, on which the body 101 may be placed. For example, at a junction surface between the base 103 and the body 101, the base may have the same cross-sectional profile as the body 101. In examples, the device contact surface 104 of the base 103 may be in contact with the interaction surface 210. In examples, the interaction surface 210 may be in contact with a top surface of the magnetometer body 320. In examples, the interaction surface 210 may be spaced apart from the top surface of the magnetometer body 320. In examples, there may be an intermediate layer between the interaction surface 210 and the top surface of the magnetometer body 320. In embodiments, the intermediate layer may comprise non-magnetic material.

In embodiments, the body 101 may be operationally coupled to the base 103 such that a rotation of the body 101 about the first rotation axis 110 causes a rotation of the at least one magnetic object 110 about the first rotation axis (102) with respect to the base 103. In examples, the base 103 may serve as a unit stationary or movably placed on the interaction surface 210. In examples, the body 101 can be rotated relative to the base 103 by the user. In examples, the base 103 may include non-magnetic material. This may be advantageous to not affect the magnetic field or the magnetic moment vector 120 when being measured/tracked by the plurality of magnetometers 300. In examples, the base 103 may serve to fix the user-borne device 100 to the interaction surface 210. In examples, the base 103 may comprise attachment means to fix the user-borne device 100 to the interaction surface 210 such as screws, threaded holes, or through holes. In examples, the body 101 may be rotatably mounted on the base 103. In examples, the base 103 may have a sliding surface or a pivot bearing to rotatably receive the body 101.

In embodiments, the at least one magnetic object 110 may comprise a longitudinal body 111 extending along a body axis 116 which defines the magnetic moment vector 120, and wherein the first rotation axis 102 does not coincide with the body axis 116. Returning to **Fig. 1****,** an exemplary embodiment of the at least one magnetic object 110 comprising a longitudinal body 111 is shown. In examples, the body axis 116 may be orthogonal to the first rotation axis 102 as shown in **Fig. 1****.** In examples the angle between the first rotation axis 102 and the body axis 116 may be in the range from >0° to 90°, 10° to 90°, 30° to 70 °, 45° to 90°, or >0° to 45°.

**Fig. 2** schematically illustrates an exemplary embodiment of a user-borne device for determining a manipulation of a user-borne device by a user in a rotated position in a top view

In embodiments, the rotation of the body 101 may cause an angular displacement of the magnetic moment vector 120 from a rotary initial position to a rotary displaced position along a rotation angle α with respect to the interaction surface 210. For example, as shown in **Fig. 2****,** the rotation angle α may be defined between the first reference axis X and the body axis 116 and/or the magnetic moment vector 120, more specifically in the XY-plane. In another example, the rotation angle α may be defined between the second reference axis Y and the body axis 116 and/or the magnetic moment vector 120. As outlined above, each magnetometer of the plurality of magnetometers 300 may be configured to measure the magnetic field associated with the at least one magnetic object 110 in the direction of the first reference axis X, the second reference axis Y, and/or the vertical reference axis Z. In other words, each magnetometer of the plurality of magnetometers 300 may be configured to perform magnetic field measurements in the direction of one axis (i.e., one dimension), two axes (i.e., two dimensions), or three axes (i.e., three dimensions). In examples, the magnetic moment vector 120 and/or the body axis 116 may be a three-dimensional coordinate vector. In examples, a two-dimensional projection of the magnetic moment vector 120 and/or the body axis 116 onto the XY plane may be used to define the rotation angle α.

In embodiments, a rotation of the body 101 in a first direction about the first rotation axis 102 may cause a rotation of the at least one magnetic object 110 in a first direction about the first rotation axis 102. A rotation of the body 101 in a second direction about the first rotation axis 102 which is opposite to the first direction about the first rotation axis 102, may cause a rotation of the at least one magnetic object 110 in a second direction about the first rotation axis 102 opposite to the first direction about the first rotation axis 102, or vice versa. In examples, the direction of rotation of the at least one magnetic object 110 may follow the direction of rotation of the body 102. In examples, the direction of rotation of the at least one magnetic object 110 may be opposite the direction of rotation of the body 102. In examples, the angular velocity of the body 102 may be different from the angular velocity of the rotation of the at least one magnetic object 110. In examples, the angular velocity of the body 102 may be equal to the angular velocity of the rotation of the at least one magnetic object 110.

In embodiments, the system may be configured to determine that a scroll event may be a scroll event in a first scroll direction when the magnetic moment vector 120 is angularly displaced in the first direction about the first rotation axis 102. The system may be configured to determine that a scroll event is a scroll event in a second scroll direction when the magnetic moment vector 120 is angularly displaced in the second direction about the first rotation axis 102. The first scroll direction may be opposite to the second scroll direction. In examples, the scroll direction may define in which direction a selection is scrolled. This may be advantageous if, for example, an animation associated with a rotation is to be controlled in a virtual environment.

In embodiments, the system may be configured to determine that a scroll event may be a clockwise scroll event, a scroll-up event, or scroll-right event when the magnetic moment vector 120 is angularly displaced in the first direction about the first rotation axis 102. The system may be configured to determine that a scroll event is counter-clockwise scroll event, scroll-down event, or a scroll-left event when the magnetic moment vector 120 is angularly displaced in the second direction about the first rotation axis 102. In examples, the clockwise scroll event, a scroll-up event, or scroll-right event may be associated with a clockwise rotation of the magnetic moment vector 120 around the rotation axis 120 as viewed from a top view on the side of the interaction surface 210 which faces the user-borne device 100.This may be advantageous if, for example, an animation associated with a rotation is to be controlled in a virtual environment.

In embodiments, the system may be configured to determine that a scroll event may be a scroll-up event or a scroll-right event when the magnetic moment vector 120 is angularly displaced in the first direction about the first rotation axis 102. The system may be configured to determine that a scroll event may be a scroll-down event or a scroll-left event when the magnetic moment vector 120 is angularly displaced in the second direction about the first rotation axis 102. This may be advantageous, for example, when navigating through a list of files in a virtual environment.

In embodiments, a rotation of the magnetic moment vector 120 in the first direction about the first rotation axis 102 results in a positive value of the rotation angle α. A rotation of the magnetic moment vector 120 in the second direction about the first rotation axis 102 results in a negative value of the rotation angle α, or vice versa. In examples, the system may be configured to register a scroll event only when an absolute value of the rotation angle α exceeds a rotation angle threshold αₜₕ. An absolute value of the rotation angle α may comprise an unsigned value of the rotation angle α. In examples, the rotation angle threshold αₜₕ is set to a value in between >0° and 15°, specifically in between 1° and 10°, and more specifically in between 2° and 5°. The usage of a rotation angle threshold may be advantageous, for example, in order not to register an accidental or unintentional rotation of the body 101 by the user as a scroll event.

In embodiments, the system may comprise a first biasing mechanism which is configured to urge, specifically to counterrotate, the body 101 from the rotary displaced position towards the rotatory initial position. In examples, the initial rotary position may be specified for a particular application. For example, rotation of the body 101 may tension the first biasing mechanism, e.g., a spring, that exerts a return force from the rotary displaced position in the direction of the rotary initial position to move the body 101 back to the rotary initial position after release by the user. In examples, the first biasing mechanism may allow the body 101 to be rotated through an angle of up to 180° or less in the first direction and/or in the second direction.

Returning to **Fig.3**, an exemplary embodiment of the user-borne device 100 in a side view is shown.

In embodiments, the body 101 may be movably coupled to the base 103 such that a translational actuation of the body 101 may cause a translational displacement of the at least one magnetic object 110 from a translatory initial position to a translatory displaced position along the first rotation axis 102 with respect to the interaction surface 210 or a rotation of the at least one magnetic object 110 with respect to the interaction surface 210 around a second rotation axis inclined to the first rotation axis 102. The actuation may include pushing a top surface of the body 103 toward the interaction surface 210. In examples, the actuation may cause the resulting compressive force to act against the base 103. In examples, the at least one magnetic object 110 is not fixedly coupled to the base 103 or is movably coupled to the base 103 such that translation of the body 103 in the direction of the interaction surface 210 along the first rotation axis 102 may result in relative movement between the at least one magnetic object 110 and the base 103 and/or the interaction surface 103. The translational movement of the at least one magnetic object 110 may be a second degree of freedom of the at least two degrees of freedom. The translational movement along the first rotation axis 120 of the at least one magnetic object 110 may result in a change in the magnetic field inside the sensing volume created by the plurality of magnetometers 300.

In embodiments, the system may be configured to register a click event when the body 101 is translationally actuated. In examples, the system may register the click event when the at least one magnetic object 110 is translationally displaced through the translational actuation of the body 101. In examples, the system may register the click event when the at least one magnetic object 110 rotates through the translational actuation of the body 101. In examples, the strength of the measured magnetic field may increase when the at least one magnetic object 110 is moved towards the interaction surface 120 along the first rotation axis 102. In examples, the strength of the measured magnetic field may decrease when the at least one magnetic object 110 is moved in a direction away from the interaction surface 120 along the first rotation axis 102. More specifically, the system 10 may be configured to determine the magnetic moment vector 120 and/or the magnetic object position vector based on which the distance between the interaction surface 210 or the reference place XY of the reference coordinate system XYZ and the at least one magnetic object 110 is determined. In examples, the body 101 may comprise a pushbutton coupled to the at least one magnetic object 110 such that pressing the pushbutton by the user U results in translational movement of the at least one magnetic object 110 towards the interaction surface 210 along the first rotation axis. A scroll event and/or a click event may be generally denoted as a trigger event. A click event may include a selection of an object, e.g., a selection of an item, a selection of a list, a selection of an item on a list. A click event may trigger a following action. A click event may trigger a clicking action, a selecting action, a dragging action and/or a dragging-and-dropping action of an item, object or a word. A click event may further trigger an action which provides additional information and/or properties of an object, item or word selected. This enables various new application fields for the user-borne device 100, for instance a dial, a mouse scroll element (e.g. a wheel), a joystick, a control for an electronic device (e.g. an audio control or a visual control), a control of software settings or visualizations (e.g. graphic software or design software), a control of a computer game, or a control of domestic devices such as light, heating, a shutter, or a gate.

In embodiments, the function or action triggered by a scroll event/click event may depend on the location of the user-borne device 100 within the interaction surface and/or the reference coordinate system XYZ, e.g., the location of the user-borne device 100 in plane defined by the reference axis X and reference axis Y.

In embodiments, the system may be configured to register a click event only when an absolute value of the translational displacement of the at least one magnetic object 100 exceeds a translational displacement threshold. The usage of a translational displacement threshold may be advantageous, for example, in order not to register an accidental or unintentional translational movement of the at least one magnetic object 110 as a click event.

In embodiments, the system may comprise a second biasing mechanism 130 configured to bias the body 101 towards a position in which the at least one magnetic object 110 is in the translatory initial position. In examples, the second biasing mechanism 130 may comprise at least a coil spring or flat spring beams. In examples, the biasing mechanism 130 may be configured to apply a return force to the body 101 and/or the at least one magnetic object 110 towards a direction away from the interaction surface 210/the base 103 when the body 101 is moved translational towards the interaction surface 210 through the actuation by the user U. In examples, a coil spring may be arranged between the base 103 and the body 101 enclosing the at least one magnetic object 110. In examples, the coil spring may be configured to apply a return force directly to the body 101. In examples, the flat spring beams may be in contact with the body 101 and/or the at least one magnetic object 110 and may be configured to apply a return force directly to the body 101 and/or the magnetic object 110. In examples, the return force may result from deformation of the second biasing mechanism 130.

In embodiments, the at least one magnetic object 110 may be at least partially enclosed in a housing. The housing may comprise an activation protrusion configured to push a popper 140 when the at least one magnetic object 110 is in an activation displaced position. In examples, the at least one magnetic object 110 may comprise a protrusion configured to push the popper 140 when the at least one magnetic object 110 is in an activation displaced position. Fig. 2 exemplary shows an embodiment of the user-borne device 100 comprising an example of the popper 140. In examples, the popper 140 may be arranged inside the body 101 and/or may be mechanically coupled to the base 103. In examples, a vertical distance c₁ along the first rotation axis 102 between the translatory initial position and the activation displaced position is in the range between 0.5 mm to 2 mm, 1 mm to 2 mm, 2 mm to 3 mm, or 3 mm to 4 mm. In examples, the popper 140 may be configured to provide tactile and/or audible feedback when being pushed.

In embodiments, the scroll event and/or the click event may be only registered when the user-borne device 100, more specifically the at least one magnetic object 110, is in proximity to the interaction surface 210, wherein proximity is defined by a tolerance band along the rotation axis 102. In examples the tolerance band may be +/- 2 mm with respect to the interaction surface 210. In examples, the interaction surface 210 may be defined as a zero-level plane. In examples, the system may be configured to register the click event when the at least one magnetic object 110 is translational displaced in a negative direction towards the plurality of magnetometers 300.

In embodiments, the user-borne device 100 may be electrically and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100.

In embodiments, the system 10 may comprise a rotation transmission device via which the body 101 is coupled to the at least one magnetic object 110. The rotation transmission device may be used to determine the ratio of a rotation of the body 101 to the rotation of the least one magnetic object 110. In examples, the rotation of the at least one magnetic object 110 may correspond to the rotation of the body 101 with respect to the angular difference in a rotation. In examples, a rotation of the body 101 by 1° may lead to the rotation of the at least one magnetic object 110 by 1°. In examples, the rotation transmission device is configured to magnify a rotation of the at least one magnetic object 110. In examples, a rotation of the body 101 by one degree may lead to the rotation of the at least one magnetic object 110 by >1°. In examples, the rotation transmission device is configured to magnify a rotation of the at least one magnetic object 110. In examples, a rotation of the body 101 by 1° may lead to the rotation of the least one magnetic object 110 by <1°. In examples, the rotation transmission device may comprise a gear transmission, e.g., a gear train, a worm gear, a slewing ring gear, and/or lever transmission.

In examples, the system 10 may comprise one or more guiding pins extending in a direction parallel to the first rotation axis 102. The guiding pins may be configured to prevent body rotation around a first axis which is perpendicular to the first rotation axis 102 and a second axis which is perpendicular to the first rotation axis 102 and the first axis. In examples, a rotation and/or a tilting of the body 101 around the reference axis X and/or the reference axis Y may be prevented. In examples, a first end of the guiding pins may be attached to the base 103. In examples, a second end of the guiding pins may be attached to the body 101. In examples, the system may comprise three, four, five, or more guiding pins.

In examples, the first biasing mechanism and the second biasing mechanism 130 may comprise non-magnetic material. This may be advantageous not to affect the magnetic field of the at least one magnetic object 110. In examples, the at least one magnetic object 110 may be designed to create a symmetric magnetic field. In examples, the magnetic field may be symmetric to the body axis 116 of the at least one magnetic object 110. For example, **Fig. 1** shows a symmetric magnetic field of the at least one magnetic object 110. The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

In embodiments, the user-borne device 100 may be a computer mouse, a keyboard, a toy, a stylus, or a dial. In other embodiments, the user-borne device 100 may be an accessory tool, e.g., a ruler. In examples, the user-borne device 100 may comprise a circular, a rectangular, a hexagonal, a polygonal, a square, or an elliptical cross-section in the XY plane.

In embodiments, the system 10 may comprise or may be connectable to a processing unit 400 which may be configured to track a manipulation of the at least one magnetic object 11 in at least five degrees of freedom and which may be configured to register a scroll event and/or a click event. Referring to **Fig. 3****,** the processing unit 400 is illustrated. The system 10 may be configured to send data to the processing unit. The data may comprise information associated with the rotation of the body 101 about the first rotation axis 102 that is detected by the plurality of magnetometers 300. In embodiments, the processing unit 400 may be electrically connected to the plurality of magnetometers. In examples, the system may be configured to receive instructions from the processing unit. The processing unit 400 may thereby direct user-initiated and/or automatically generated queries to the system 10. The processing unit 400 may comprise at least one processor and at least one data storage (e.g. a memory such as, ROM, RAM, solid state drive..). The system 10 and/or the processing unit 400 is not limited to a particular hardware environment. As described above, the system 10 may comprise at least one database. Alternatively, or in addition, the system 10 may access a database in a cloud (via a communication interface). In examples, the processing unit 400 may serve as communication bridge between the plurality of magnetometers 300 and a remote resource. The system 10 may comprise a (at least one) communication interface to couple the plurality of magnetometers, the processing unit and/or the database. The communication interface may comprise one or more of a network, internet, a local area network, a wireless local area network, a broadband cellular network, and/or a wired network. In examples, the system 10 may couple to one or more features via a server hosted in a cloud.

In embodiments, the system 10 may comprise at least one output interface 500. In examples, the at least one output interface 500 may be configured to represent the user-borne device 100. More specifically, the at least one output interface 500 may be configured to visually reproduce the user-borne device 100 as a virtual object. In examples, the system 10 may be configured to reproduce the manipulation of the user-borne device 100 on the interaction surface 210 as a manipulation of the virtual object on the at least one output interface 500. In examples, the system 10 may be configured to visually reproduce the scroll event and/or the click event on the output interface 500 in plane motion. As mentioned above, the scroll event and/or the click event may be a control mode of a function in a virtual environment that is associated with the user input. The control mode may result in a rotational and/or translational movement of an object in the virtual environment. The function associated with the scroll event and/or the click event may comprise a scrolling of files or data, a rotational or translational movement associated with a selection of a choice from a plurality of choices. The function associated with the scroll event and/or the click event may include rotating a body in a virtual environment and/or changing a perspective in a virtual environment. In examples, rotating the body 101 by the user and/or the translational movement of the at least one magnetic object 110 can control a function in a virtual environment, such as browsing or searching files, controlling a virtual body in the virtual environment, or selecting a particular parameter in the virtual environment, such as, but not limiting, colors, numbers, music, or shapes. In examples, the output interface 500 may be configured to provide feedback to the user U. In embodiments, the output interface 500 may comprise one or more light-emitting diodes, a display, or a screen. In examples, the aforementioned virtual environment and/or the function may be displayed through the output interface 500, e.g. the display or screen, to the user U.

In examples, the system 10 may comprise an electronics device. In examples, the processing unit 400 may be integrated into the electronics device. The electronics device may be a tablet, a cell phone, a laptop, a computer, a virtual reality (VR) set or a television. Furthermore, the electronics device 500 may comprise a user interface configured to interact with a user U and/or receive a user input. In an embodiment, the user interface may be integrated into the output interface 510. The data storage of the system 10 may be integrated in and/or connected to the electronics device 500. In examples, the plurality of magnetometers 300 may be integrated in a wall, a furniture, a notebook, the electronics device, a screen or display, and/or a mouse pad. In examples, a surface of the wall, the furniture, the notebook, the electronics device, the screen or display, a keyboard, and/or the mouse pad may serve as the interaction surface 210.

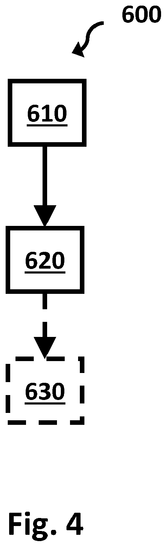

**Fig. 4** schematically illustrates a computer-implemented method for determining a manipulation of a user-borne device according to an aspect of the present disclosure.

According to the second aspect, the computer-implemented method 600 for determining a manipulation of the user-borne device 100 by a user U comprises measuring a magnetic field associated with at least one magnetic object with a plurality of magnetometers 300. The at least one magnetic object 110 is coupled to the body 101 of the user-borne device 100. The plurality of magnetometers 300 is configured to create a sensing volume. The user-borne device 100 is operable on the interaction surface 210 defined within the sensing volume. Furthermore, the computer-implemented method 600 comprises registering 620 a scroll event when a rotation of the body 101 about a first rotation axis 102 is determined by the system 10 on the basis of the measured magnetic field associated with the at least one magnetic object 110. The user-borne device 100 may be designed in accordance with the embodiments of the first aspect.

In embodiments, the body 101 may be movably coupled to the base 103 such that an actuation of the body 101 causes a translational displacement of the at least one magnetic object 110 from a translational initial position to a translatory displaced position along the first rotation axis 102 with respect to the interaction surface (210), wherein the method further comprises registering 630 a click event when the at least one magnetic object is translationally displaced along the first rotation axis 102.

According to an aspect of the present disclosure, a computer system may be configured to execute the computer-implemented method 600 as described above. According to another aspect of the present disclosure a computer program may be configured to execute the computer-implemented method 600 as described above. Furthermore, a computer-readable medium or signal storing the computer program may be provided. In embodiments, the system 100 according to the first aspect may comprise the computer system. In embodiments, the system 10 according to the first aspect may be configured to execute the computer-implemented method 600 according to the second aspect.

Furthermore, the particular features, structures, or characteristics can be combined in any suitable combinations and/or sub-combinations in one or more embodiments or examples.

### Embodiments:

1. A system 10 for determining a manipulation of a user-borne device 100 by a user U, the system comprising:
   a user-borne device 100 comprising:
      a body 101,
      at least one magnetic object 110 defining a magnetic moment vector 120 and operationally coupled to the body 101 such that a rotation of the body 101 about a first rotation axis 102 causes a rotation of the at least one magnetic object 110 about the first rotation axis 102,
   a plurality of magnetometers 300 associated with an interaction surface 210, wherein the plurality of magnetometers 300 is configured to create a sensing volume and configured to measure a magnetic field associated with the at least one magnetic object 110,
   wherein the system 10 is configured to register a scroll event when a rotation of the body 101 about the first rotation axis 102 is determined by the system 10 on the basis of the measured magnetic field associated with the at least one magnetic object 110.
2. The system 10 of embodiment 1, wherein the system 10 is configured to track a manipulation of the at least one magnetic object 110 in at least five degrees of freedom.
3. The system 10 of embodiment 1 or 2, wherein the user-borne device 100 comprises a base 103 coupled to the body 101, wherein the base 103 comprises a device contact surface 104 being orthogonal to the first rotation axis 102 and extending along a first device axis x_{d} and a second device axis y_{d} orthogonal to the first device axis x_{d}, wherein when in use by a user the user-borne device 100 is configured to be placed/manipulated with the device contact surface 104 in contact with the interaction surface 210.
4. The system 10 of embodiment 3, wherein the body 101 is operationally coupled to the base 103 such that a rotation of the body 101 about the first rotation axis 110 causes a rotation of the at least one magnetic object 110 about the first rotation axis 102 with respect to the base 103.
5. The system 10 of any one of the preceding embodiments, wherein the at least one magnetic object 110 comprises a longitudinal body 111 extending along a body axis 116 which defines the magnetic moment vector 120, and wherein the first rotation axis 102 does not coincide with the body axis 116.
6. The system 10 of any one of the preceding embodiments, wherein a rotation of the body 101 causes an angular displacement of the magnetic moment vector 120 from a rotary initial position to a rotary displaced position along a rotation angle α with respect to the interaction surface 210.
7. The system 10 of any one of the preceding embodiments, wherein a rotation of the body 101 in a first direction about the first rotation axis 102 causes a rotation of the at least one magnetic object 110 in a first direction about the first rotation axis 102, and wherein a rotation of the body 101 in a second direction about the first rotation axis 102 which is opposite to the first direction about the first rotation axis 102, causes a rotation of the at least one magnetic object 110 in a second direction about the first rotation axis 102 opposite to the first direction about the first rotation axis 102.
8. The system 10 of embodiment 7, being configured to determine that a scroll event is a scroll event in a first scroll direction when the magnetic moment vector 120 is angularly displaced in the first direction about the first rotation axis 102, and to determine that a scroll event is a scroll event in a second scroll direction when the magnetic moment vector 120 is angularly displaced in the second direction about the first rotation axis 102.
9. The system 10 of embodiment 7 or 8, being configured to determine that a scroll event is a clockwise scroll event, a scroll-up event, or scroll-right event when the magnetic moment vector 120 is angularly displaced in the first direction about the first rotation axis 102, and to determine that a scroll event is a counter-clockwise scroll event, scroll-down event, or a scroll-left event when the magnetic moment vector 120 is angularly displaced in the second direction about the first rotation axis 102.
10. The system 10 of embodiments 7, 8, or 9, wherein a rotation of the magnetic moment vector 120 in the first direction about the first rotation axis 102 results in a positive value of the rotation angle α, and
   wherein a rotation of the magnetic moment vector 120 in the second direction about the first rotation axis 102 results in a negative value of the rotation angle α, or vice versa.
11. The system 10 of embodiment 10, being configured to register a scroll event only when an absolute value of the rotation angle α exceeds a rotation angle threshold αₜₕ.
12. The system 10 of embodiment 11, wherein the rotation angle threshold αₜₕ is set to a value in between >0° and 15°, specifically in between 1° and 10°, and more specifically in between 2° and 5°.
13. The system 10 of any one of the preceding embodiments, if at least dependent on embodiment 6, further comprising a first biasing mechanism which is configured to urge, specifically to counterrotate, the body 101 from the rotary displaced position towards the rotatory initial position.
14. The system 10 of any one of the preceding embodiments, if at least dependent on embodiment 3, wherein the body 101 is movably coupled to the base 103 such that a translational actuation of the body 101 causes a translational displacement of the at least one magnetic object 110 from a translatory initial position to a translatory displaced position along the first rotation axis 102 with respect to the interaction surface 210 or a rotation of the at least one magnetic object 110 with respect to the interaction surface 210 around a second rotation axis inclined to the first rotation axis 102.
15. The system 10 of embodiment 14, being configured to register a click event when the body 101 is translationally actuated.
16. The system 10 of embodiment 14 or 15, being configured to register a click event only when an absolute value of the translational displacement of the at least one magnetic object 100 exceeds a translational displacement threshold.
17. The system 10 of embodiments 14, 15, or 16, comprising a second biasing mechanism 130 configured to bias the body 101 towards a position in which the at least one magnetic object 110 is in the translatory initial position.
18. The system 10 of embodiment 17, wherein the second biasing mechanism 130 may comprise at least a coil spring or flat spring beams.
19. The system 10 of any one of embodiments 14 to 18, wherein the at least one magnetic object 110 is at least partially enclosed in a housing, wherein the housing comprises an activation protrusion configured to push a popper 140 when the at least one magnetic object 110 is in an activation displaced position.
20. The system 10 of embodiment 19, wherein a vertical distance c₁ along the first rotation axis 102 between the translatory initial position and the activation displaced position is in the range between 0.5 mm to 2 mm, 1 mm to 2 mm, 2 mm to 3 mm, or 3 mm to 4 mm.
21. The system 10 of embodiment 20, wherein the popper 140 is configured to provide tactile and/or audible feedback when being pushed.
22. The system 10 of any one of the preceding embodiments, wherein the scroll event and/or the click event is only registered when the user-borne device 100 is in proximity to the interaction surface 210, wherein proximity is defined by a tolerance band along the rotation axis 102.
23. The system 10 of any one of the preceding embodiments, wherein the user-borne device 100 is electrically and/or electronically passive.
24. The system 10 of any one of the preceding embodiments, comprising a rotation transmission device via which the body 101 is coupled to the at least one magnetic object 110.
25. The system 10 of embodiment 24, wherein the rotation transmission device is configured to magnify a rotation of the at least one magnetic object 110.
26. The system 10 of embodiment 24 or 25, wherein the rotation transmission device comprises a gear transmission and/or a lever transmission.
27. The system 10 of any one of the preceding embodiments, further comprising one or more guiding pins extending in a direction parallel to the first rotation axis 102 and configured to prevent body rotation around a first axis which is perpendicular to the first rotation axis 102 and a second axis which is perpendicular to the first rotation axis 102 and the first axis.
28. The system 10 of embodiments 13, 17, or 18, wherein the first biasing mechanism and the second biasing mechanism 130 comprise non-magnetic material.
29. The system 10 of any one of the preceding embodiments, wherein the at least one magnetic object 110 is designed to to create a symmetric magnetic field.
30. The system 10 of any one of the preceding embodiments, wherein the at least one magnetic object 110 is a permanent magnet.
31. The system 10 of any one of the preceding embodiments, wherein the user-borne device 100 is a computer mouse, a keyboard, a toy, or a dial.
32. The system 10 of any one of the preceding embodiments, wherein the system 10 comprises or is connectable to a processing unit 400 which is configured to track a manipulation of the at least one magnetic object 110 in at least two degrees of freedom and which is configured to register a scroll event and/or a click event.
33. The system 10 of embodiment 32, wherein the system 10 comprises at least one output interface 500, wherein the at least one output interface 500 is configured to represent the user-borne device 100, more specifically wherein the at least one output interface 500 is configured to visually reproduce the user-borne device 100 as a virtual object.
34. The system 10 of embodiment 33, wherein the system 10 is configured to reproduce the manipulation of the user-borne device 100 on the interaction surface 210 as a manipulation of the virtual object on the at least one output interface 500.
35. The system 10 of embodiment 33 or 34, wherein the system 10 is configured to visually reproduce a motion of the user-borne device 100 with respect to the interaction surface 210, the scroll event and/or the click event on the output interface 500.
36. The system 10 of any one of embodiments 33 to 35, wherein the output interface 500 comprises one or more light-emitting diodes, a display or a screen.
37. The system 10 of any one of the preceding embodiments, if at least dependent on embodiment 32, wherein the system 10 comprises an electronics device, wherein the processing unit 400 is integrated into the electronics device.
38. The system 10 of any one of embodiments 33 to 37, if at least dependent on embodiment 37, wherein the output interface 500 is integrated into the electronics device.
39. The system 10 of any one of the preceding embodiments, wherein the plurality of magnetometers 300 is integrated in a wall, a furniture, a notebook, an electronics device, a screen or display, a keyboard, and/or a mouse pad.
40. A computer-implemented method 600 for determining a manipulation of a user-borne device 100 by a user U, comprising:
   - measuring 610 a magnetic field associated with at least one magnetic obj ect with a plurality of magnetometers 300, wherein the at least one magnetic object is coupled to a body 101 of a user-borne device 100 and the plurality of magnetometers 300 is configured to create a sensing volume,
      wherein the user-borne device 100 is operable on an interaction surface 210 defined within the sensing volume, and
   - registering 620 a scroll event when a rotation of the body 101 about a first rotation axis is determined by the system 10 on the basis of the measured magnetic field associated with the at least one magnetic object 110.
41. The computer-implemented method 600 of embodiment 40, wherein the body 101 is movably coupled to a base 103 such that an actuation of the body 101 causes a translational displacement of the at least one magnetic object 110 from a translational initial position to a translatory displaced position along the first rotation axis 102 with respect to the interaction surface 210, wherein the method further comprises registering 630 a click event when the at least one magnetic object is translationally displaced along the first rotation axis 102.
42. A computer program configured to execute the computer-implemented method according to any one of embodiments 38 or 39.
43. A computer-readable medium or signal storing the computer program of embodiment 42.

## Claims

1. A system (10) for determining a manipulation of a user-borne device (100) by a user (U), the system comprising:
a user-borne device (100) comprising:
a body (101),
at least one magnetic object (110) defining a magnetic moment vector (120) and operationally coupled to the body (101) such that a rotation of the body (101) about a first rotation axis (102) causes a rotation of the at least one magnetic object (110) about the first rotation axis (102),
a plurality of magnetometers (300) associated with an interaction surface (210), wherein the plurality of magnetometers (300) is configured to create a sensing volume and configured to measure a magnetic field associated with the at least one magnetic object (110),
wherein the system (10) is configured to register a scroll event when a rotation of the body (101) about the first rotation axis (102) is determined by the system (10) on the basis of the measured magnetic field associated with the at least one magnetic object 110.

2. The system (10) of claim 1, wherein the user-borne device (100) comprises a base (103) coupled to the body (101), wherein the base (103) comprises a device contact surface (104) being orthogonal to the first rotation axis (102) and extending along a first device axis (x_{d}) and a second device axis (y_{d}) orthogonal to the first device axis (x_{d}), wherein in use by a user the user-borne device (100) is configured to be placed/manipulated with the device contact surface (104) in contact with the interaction surface (210).

3. The system (10) of claim 2, wherein the body (101) is operationally coupled to the base (103) such that a rotation of the body (101) about the first rotation axis (110) causes a rotation of the at least one magnetic object (110) about the first rotation axis (102) with respect to the base (103).

4. The system (10) of any one of the preceding claims, wherein the at least one magnetic object (110) comprises a longitudinal body (111) extending along a body axis (116) which defines the magnetic moment vector (120), and wherein the first rotation axis (102) does not coincide with the body axis (116).

5. The system (10) of any one of the preceding claims, wherein a rotation of the body (101) causes an angular displacement of the magnetic moment vector (120) from a rotary initial position to a rotary displaced position along a rotation angle (α) with respect to the interaction surface (210).

6. The system (10) of any one of the preceding claims, wherein a rotation of the body (101) in a first direction about the first rotation axis (102) causes a rotation of the at least one magnetic object (110) in a first direction about the first rotation axis (102), and wherein a rotation of the body (101) in a second direction about the first rotation axis (102) which is opposite to the first direction about the first rotation axis (102), causes a rotation of the at least one magnetic object (110) in a second direction about the first rotation axis (102) opposite to the first direction about the first rotation axis (102).

7. The system (10) of claim 6, being configured to determine that a scroll event is a scroll event in a first scroll direction when the magnetic moment vector (120) is angularly displaced in the first direction about the first rotation axis (102), and to determine that a scroll event is a scroll event in a second scroll direction when the magnetic moment vector (120) is angularly displaced in the second direction about the first rotation axis (102).

8. The system (10) of claim 6 or 7, being configured to determine that a scroll event is a clockwise scroll event, a scroll-up event, or scroll-right event when the magnetic moment vector (120) is angularly displaced in the first direction about the first rotation axis (102), and to determine that a scroll event is a counter-clockwise scroll event, scroll-down event, or a scroll-left event when the magnetic moment vector (120) is angularly displaced in the second direction about the first rotation axis (102).

9. The system (10) of any one of the preceding claims, if at least dependent on claim 5, further comprising a first biasing mechanism which is configured to urge, specifically to counterrotate, the body (101) from the rotary displaced position towards the rotatory initial position.

10. The system (10) of any one of the preceding claims, if at least dependent on claim 2, wherein the body (101) is movably coupled to the base (103) such that a translational actuation of the body (101) causes a translational displacement of the at least one magnetic object (110) from a translatory initial position to a translatory displaced position along the first rotation axis (102) with respect to the interaction surface (210) or a rotation of the at least one magnetic object (110) with respect to the interaction surface (210) around a second rotation axis inclined to the first rotation axis (102).

11. The system (10) of any one of claim 10, wherein the at least one magnetic object (110) is at least partially enclosed in a housing, wherein the housing comprises an activation protrusion configured to push a popper (140) when the at least one magnetic object (110) is in an activation displaced position.

12. The system (10) of claim 11, wherein the popper (140) is configured to provide tactile and/or audible feedback when being pushed.

13. The system (10) of any one of the preceding claims, further comprising one or more guiding pins extending in a direction parallel to the first rotation axis 102 and configured to prevent body rotation around a first axis which is perpendicular to the first rotation axis (102) and a second axis which is perpendicular to the first rotation axis (102) and the first axis.

14. A computer-implemented method (600) for determining a manipulation of a user-borne device (100) by a user (U), comprising:
- measuring (610) a magnetic field associated with at least one magnetic object with a plurality of magnetometers (300), wherein the at least one magnetic object is coupled to a body (101) of a user-borne device (100) and the plurality of magnetometers (300) is configured to create a sensing volume,
wherein the user-borne device (100) is operable on an interaction surface (210) defined within the sensing volume, and
- registering (620) a scroll event when a rotation of the body (101) about a first rotation axis (102) is determined by the system (10) on the basis of the measured magnetic field associated with the at least one magnetic object 110.

15. The computer-implemented method (600) of claim 14, wherein the body (101) is movably coupled to a base (103) such that an actuation of the body (101) causes a translational displacement of the at least one magnetic object (110) from a translational initial position to a translatory displaced position along the first rotation axis (102) with respect to the interaction surface (210), wherein the method further comprises registering (630) a click event when the at least one magnetic object is translationally displaced along the first rotation axis (102).
